# EUROPÄISCHE PATENTSCHRIFT

(11) **EP 3 436 637 B1**
(45) Veröffentlichungstag und Bekanntmachung des Hinweises auf die Patenterteilung: **11.12.2019**
(21) Anmeldenummer: 17711566.4
(22) Anmeldetag: 06.03.2017
(51) Int. Cl.: E01B 29/42, B23K 11/04, B23K 37/00, B23K 37/04

(54) **SCHWEISSAGGREGAT ZUM VERSCHWEISSEN ZWEIER SCHIENEN EINES GLEISES**
WELDING UNIT FOR WELDING TWO RAILS OF A TRACK
GROUPE DE SOUDAGE SERVANT AU SOUDAGE DE DEUX RAILS D'UNE VOIE FERRÉE

(30) Priorität: 01.04.2016 AT 6816 U
(43) Veröffentlichungstag der Anmeldung: 06.02.2019
(73) Patentinhaber: Plasser & Theurer Export von Bahnbaumaschinen Gesellschaft m.b.H., 1010 Wien (AT)
(72) Erfinder: MÜHLLEITNER, Heinz, 3100 Neidling (AT)
(86) Internationale Anmeldenummer: PCT/EP2017/000300
(87) Internationale Veröffentlichungsnummer: WO 2017/167433

(56) Entgegenhaltungen:
- EP-A1- 0 597 215
- US-A- 3 349 216
- US-B2- 8 907 242

## Beschreibung

Die Erfindung betrifft ein Schweißaggregat zum Verschweißen zweier Schienen eines Gleises, mit zwei entlang von Aggregatführungen in einer Aggregat-Längsrichtung zueinander bewegbaren Schienenklemmeinheiten, die jeweils durch einen Antrieb paarweise an die Schiene anlegbare Klemmbacken aufweisen, wobei die für eine Stromübertragung vorgesehenen Klemmbacken in bezug auf eine der beiden Schienenklemmeinheiten durch eine Stromleitung mit einem - durch einen Fixierantrieb an eine Stromschiene anlegbaren und relativ zu dieser verschiebbaren - Stromschienenkontakt verbunden sind.

Ein derartiges Schweißaggregat zum Abbrennstumpfschweißen ist durch US 8 907 242 bekannt. Zur Stromübertragung sind zwei voneinander getrennte Stromschienen sowie zwei Stromschienenkontakte vorgesehen. Die Stromschiene hat gleichzeitig auch die Funktion eines Hydraulikzylinders für die Verschiebung der Schienenklemmeinheiten.

Die Aufgabe der vorliegenden Erfindung liegt nun in der Schaffung eines Schweißaggregates der eingangs genannten Art, mit dem eine verbesserte Stromübertragung möglich ist.

Diese Aufgabe wird erfindungsgemäß mit einem Schweißaggregat der gattungsgemäßen Art durch die im Kennzeichen des Hauptanspruches angeführten Merkmale gelöst.

Mit dem Einsatz lediglich einer einzigen Stromschiene ist ein reduzierter konstruktiver Aufwand erzielbar. Außerdem ist die - parallel zur Stromübertragung lediglich als Führung für die beiden Schienenklemmeinheiten verwendete - Stromschiene sowohl bezüglich Stromleitfähigkeit als auch Kühlung optimierbar.

Weitere Vorteile der Erfindung ergeben sich aus den Unteransprüchen und der Zeichnungsbeschreibung.

Im Folgenden wird die Erfindung anhand eines in der Zeichnung dargestellten Ausführungsbeispieles näher beschrieben. Es zeigen: Fig. 1 eine vereinfachte Seitenansicht eines Schweißaggregates, Fig. 2 eine schematisierte Ansicht von Klemmbacken zur Stromübertragung, und Fig. 3 eine Gesamtansicht des Schweißaggregates, wobei die für die Stromübertragung vorgesehenen Teile in vollen Linien dargestellt sind.

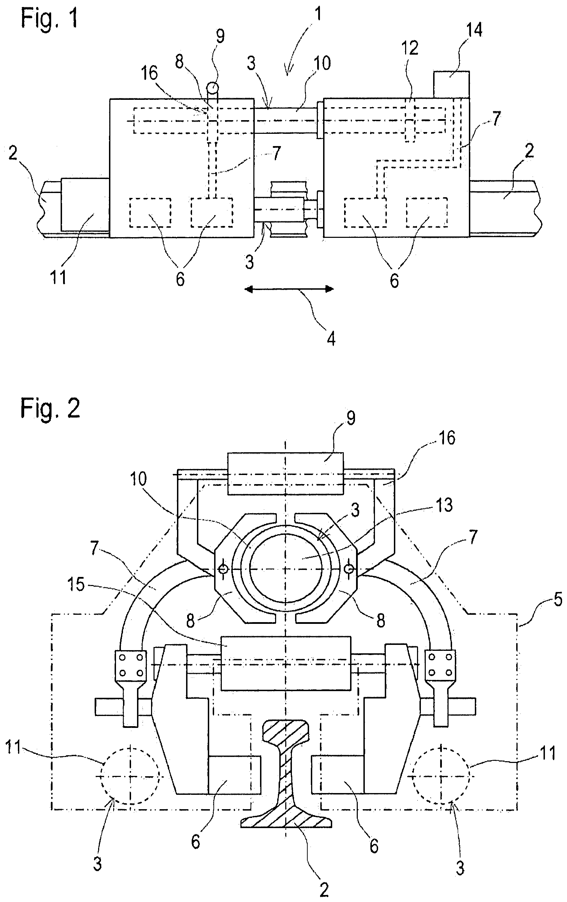

Ein in den Fig. 1 bis 3 dargestelltes Schweißaggregat 1 ist zum Verschweißen zweier Schienen 2 eines Gleises ausgebildet und weist entlang von drei Aggregatführungen 3 in einer Aggregat-Längsrichtung 4 zueinander bewegbare Schienenklemmeinheiten 5 auf. Diese sind jeweils mitpaarweise an die Schiene 2 anlegbaren Klemmbacken 6 ausgestattet. Wie insbesondere in Fig. 2 ersichtlich, sind die beiden beidseits der Schienen 2 positionierten unteren Aggregatführungen 3 als die beiden Schienenklemmeinheiten 5 zueinander verstellbare hydraulische Verschiebeantriebe 11 ausgebildet.

Die für eine Stromübertragung vorgesehenen Klemmbacken 6 sind von den für die Schienenklemmung vorgesehenen Klemmbacken 6 getrennt (s. Fig. 1) und in bezug auf eine der beiden Schienenklemmeinheiten 5 jeweils durch eine Stromleitung 7 mit einem Stromschienenkontakt 8 verbunden. Diese sind durch einen Fixierantrieb 9 an eine im Querschnitt rohrförmige Stromschiene 10 anlegbar.

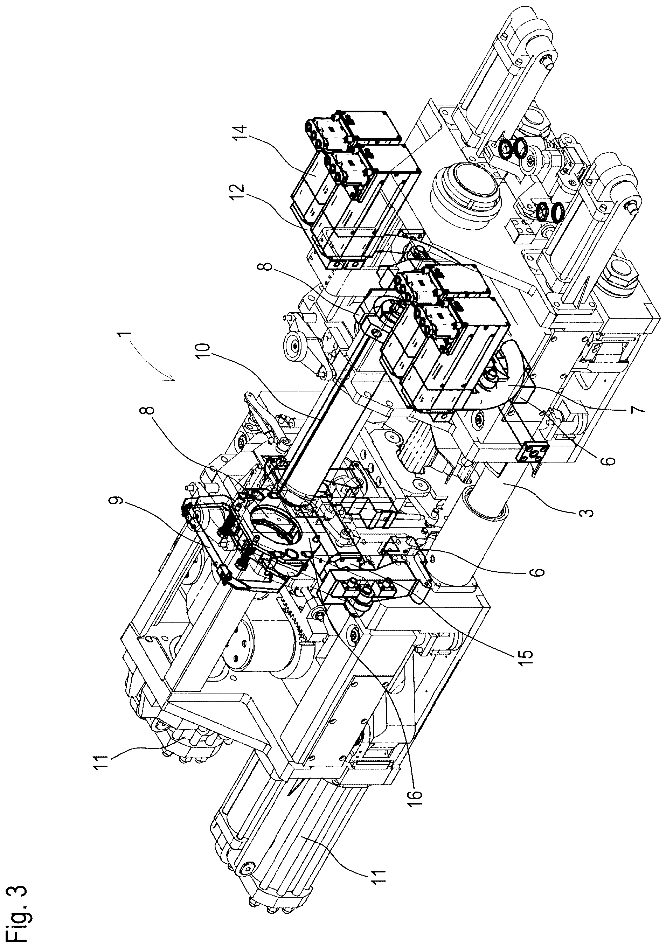

Die Stromschiene 10 ist mit der beide Schienenklemmeinheiten 5 miteinander verbindenden, von den beiden Verschiebeantrieben 11 distanzierten und in der Aggregat-Längsrichtung 4 verlaufenden Aggregatführung 3 im Bereich zwischen den Stromschienenkontakten 8 und einer Stromzuführung 12 identisch. In diesem Abschnitt weist die Aggregatführung 3 bzw. Stromschiene 10 einen vergrößerten Querschnitt aus Kupfer sowie eine Kühleinrichtung 13 auf (s. Fig. 3).

Die Stromschiene 10 bzw. Aggregatführung 3 ist lediglich mit der Transformatoren 14 für die Stromzuführung 12 aufweisenden Schienenklemmeinheit 5 verbunden und daher relativ zu der mit den Stromschienenkontakten 10 ausgestatteten Schienenklemmeinheit 5 in der Aggregat-Längsrichtung 4 verschiebbar.

Wie in Fig. 2 ersichtlich, sind die beiden für die Stromzuführung vorgesehenen Klemmbacken 6 durch einen eigenen Klemmantrieb 15 zur Kontaktierung der Schiene 2 normal zur Aggregat-Längsrichtung 4 verstellbar. Die beiden halbkreisförmig ausgebildeten Stromschienenkontakte 8 sind auf einem gemeinsamen Kontaktschlitten 16 angeordnet und durch den gemeinsamen Fixierantrieb 9 an die Stromschiene 10 anlegbar. Der Kontaktschlitten 16 ist relativ zur zugeordneten Schienenklemmeinheit 5 in Aggregat-Längsrichtung 4 verschiebbar gelagert.

Zur Einleitung eines Schweißvorganges wird jene Schiene 2 (in Fig. 1 rechts) durch die mit den Transformatoren 14 ausgestattete erste Schienenklemmeinheit 5 mit Hilfe der Klemmbacken 6 festgeklemmt, die nicht relativ zu den Schwellen verschoben wird.

Die zweite Schiene 2 wird mit Hilfe der gegenüberliegenden zweiten Schienenklemmeinheit 5 unter Anpressen der zugeordneten und nicht für die Stromübertragung vorgesehenen Klemmbacken 6 und Beaufschlagung der Verschiebeantriebe 11 soweit in Richtung zur gegenüberliegenden ersten Schiene 2 gezogen, bis eine für die Einleitung des Schweißvorganges erforderliche Schienenlücke von etwa 30 bis 35 mm erreicht ist.

Als nächster Schritt werden die für die Stromübertragung vorgesehenen Klemmbacken 6 an die genannte zweite Schiene 2 und die beiden Stromschienenkontakte 8 an die Stromschiene 10 angepresst. In weiterer Folge wird die genannte zweite Schienenklemmeinheit 5 mitsamt der festgeklemmten zweiten Schiene 2 weiter zur ersten Schiene 2 bewegt. Gleichzeitig erfolgt über die Transformatoren 14, die Stromschiene 10, die Stromschienenkontakte 8, die Stromleitung 7 und die angeschlossenen Klemmbacken 6 eine permanente Stromzuführung.

Infolge der resultierenden Relativverschiebung zwischen der Stromschiene 10 und den festgeklemmten Stromschienenkontakten 8 in Bezug auf die zweite Schienenklemmeinheit 5 kommt es dabei zu einer geringfügigen Verbiegung der beiden flexiblen Stromleitungen 7. Nach Beendigung des Schweißvorganges werden die beiden Stromschienenkontakte 8 wiederum von der Stromschiene 10 distanziert (s. Fig. 2), wobei der Kontaktschlitten 16 durch Federvorspannung automatisch in seine vordere Ausgangsposition zurückverschoben wird.

## Patentansprüche

1. Schweißaggregat (1) zum Verschweißen zweier Schienen (2) eines Gleises, mit einer Stromschiene (10) und mit durch Verschiebeantriebe (11) in einer Aggregat-Längsrichtung (4) zueinander bewegbaren Schienenklemmeinheiten (5), die jeweils durch einen Antrieb paarweise an die Schiene (2) anlegbare Klemmbacken (6) aufweisen, wobei die für eine Stromübertragung vorgesehenen Klemmbacken (6) in bezug auf eine der beiden Schienenklemmeinheiten (5) durch eine Stromleitung (7) mit einem - durch einen Fixierantrieb (9) an der Stromschiene (10) anlegbaren und relativ zu dieser verschiebbaren - Stromschienenkontakt (8) verbunden sind, wobei die Stromschiene (10) als beide Schienenklemmeinheiten (5) miteinander verbindende und in der Aggregat-Längsrichtung (4) verlaufende Aggregatführung (3) ausgebildet sowie relativ zu der mit den Stromschienenkontakten (8) ausgestatteten Schienenklemmeinheit (5) in der Aggregat-Längsrichtung (4) verschiebbar ist, **gekennzeichnet durch** folgende Merkmale:
a) die Stromschiene (10) ist als von den Verschiebeantrieben (11) distanzierte Aggregatführung (3) ausgebildet,
b) die Stromschiene (10) ist mit einer Kühleinrichtung (13) ausgestattet.

2. Schweißaggregat nach Anspruch 1, **dadurch gekennzeichnet, dass** die zur Stromübertragung vorgesehenen Klemmbacken (6) von den für die Schienenklemmung vorgesehenen Klemmbacken (6) getrennt und durch einen eigenen Klemmantrieb (15) zur Kontaktierung der Schiene (2) normal zur Aggregat-Längsrichtung (4) verstellbar sind.

3. Schweißaggregat nach einem der Ansprüche 1 oder 2, **dadurch gekennzeichnet, dass** die beiden Stromschienenkontakte (8) auf einem gemeinsamen Kontaktschlitten (16) angeordnet und durch einen gemeinsamen Fixierantrieb (9) an die Stromschiene (10) anlegbar sind.

## Claims

1. A welding assembly (1) for welding two rails (2) of a track, including a power rail (10) and rail clamping units (5) movable towards one another in an assembly longitudinal direction (4) by means of displacement drives (11), each rail clamping unit (5) having clamping jaws (6) designed to be applied to the rail (2) in pairs by means of a drive, wherein the clamping jaws (6) provided for power transmission are connected - with regard to one of the two rail clamping units (5) - by a power line (7) to a power rail contact (8) which is designed to be applied to the power rail (10) by means of a fixing drive (9) and is displaceable relative thereto, wherein
the power rail (10) is configured as an assembly guide (3), extending in the assembly longitudinal direction (4) and connecting both rail clamping units (5) to one another, and is displaceable in the assembly longitudinal direction (4) relative to the rail clamping unit (5) equipped with the power rail contacts (8),
**characterized by the following features:**
a) the power rail (8) is designed as an assembly guide (3) which is spaced from the displacement drives (11),
b) the power rail (10) is equipped with a cooling device (13).

2. A welding assembly according to claim 1, **characterized in that** the clamping jaws (6) provided for power transmission are separate from the clamping jaws (6) provided for rail clamping and, for contacting the rail (2), are adjustable perpendicularly to the assembly longitudinal direction (4) by means of a separate clamping drive (15).

3. A welding assembly according to one of claims 1 or 2, **characterized in that** the two power rail contacts (8) are arranged on a common contact carriage (16) and designed to be applied to the power rail (10) by means of a common fixing drive (9).

## Revendications

1. Module de soudure (1) pour la soudure de deux rails (2) d'une voie ferrée, avec un rail conducteur (10) et avec des unités de serrage de rails (5) pouvant être déplacées l'une vers l'autre dans une direction longitudinale de module (4) par des entraînements coulissants (11), lesquelles présentent chacune des mâchoires de serrage (6) pouvant être fermées sur le rail (2) par paire par un entraînement, dans lequel les mâchoires de serrage (6) prévues pour une transmission de courant sont connectées à un contact de rail conducteur (8) pouvant être appuyé sur le rail conducteur (10) par un entraînement de fixation (9) et pouvant être coulissé par rapport à celui-ci par rapport à une des deux unités de serrage de rails (5) par une ligne de courant (7), dans lequel le rail conducteur (10) est réalisé en tant que guide de module (3) connectant les deux unités de serrage de rails (5) l'une à l'autre et s'étendant dans la direction longitudinale de module (4) ainsi que peut être coulissé dans la direction longitudinale de module (4) par rapport à l'unité de serrage de rails (5) équipée des contacts de rail conducteur (8),
**caractérisé par les caractéristiques suivantes :**
a) le rail conducteur (10) est réalisé en tant que guide de module (3) écarté des entraînements coulissants (11),
b) le rail conducteur (10) est équipé d'un dispositif de refroidissement (13).

2. Module de soudure selon la revendication 1, **caractérisé en ce que** les mâchoires de serrage (6) prévues pour la transmission de courant sont séparées des mâchoires de serrage (6) prévues pour le serrage de rails et peuvent être déplacées par un entraînement de serrage propre (15) pour l'établissement de contact avec le rail (2) perpendiculairement à la direction longitudinale de module (4).

3. Module de soudure selon une des revendications 1 ou 2, **caractérisé en ce que** les deux contacts de rail conducteur (8) sont disposés sur un chariot de contact commun (16) et peuvent être appuyés sur le rail conducteur (10) par un entraînement de fixation commun (9).
